# FASCICULE DE BREVET EUROPEEN

(11) **EP 3 794 958 B1**
(45) Date de publication et mention de la délivrance du brevet: **31.07.2024**
(21) Numéro de dépôt: 20197142.1
(22) Date de dépôt: 21.09.2020
(51) Int. Cl.: A23L 5/10, A23L 3/16, A47J 36/06, A47J 36/38, A23L 3/375, A47J 36/10

(54) **CUVE A CAPOT**
UMMANTELTER TANK
TANK WITH COVER

(30) Priorité: 23.09.2019 FR 1910456
(43) Date de publication de la demande: 24.03.2021
(73) Titulaire: ETA, 18220 Rians (FR)
(72) Inventeur: Gigleux, Hervé, 18000 Bourges (FR)
(74) Mandataire: Eidelsberg, Olivier Nathan

(56) Documents cités:
- EP-A1- 1 201 166
- CN-U- 208 957 625
- FR-A1- 2 765 501
- FR-A1- 2 774 911
- US-A1- 2004 255 599

## Description

La présente invention se rapporte aux cuves ou cuiseurs utilisés dans la fabrication de produits agroalimentaires.

Il est souvent nécessaire, après cuisson dans la cuve, de faire refroidir rapidement le produit. Généralement, le refroidissement se fait par injection dans la cuve d'azote ou de CO₂ liquide à très basse température. Ce liquide au contact du produit chaud se vaporise en créant une grande quantité de vapeur fluente, ce qui impose d'avoir une cuve ouverte à l'atmosphère pour éviter sa mise en pression. Il convient d'évacuer ces vapeurs à l'extérieur du local.

Au FR 2 765 501, les vapeurs sont captées par une hotte, qui ne s'applique pas à l'ouverture de la cuve, qui est disposée au-dessus de la cuve et qui communique avec une gaine d'évacuation. Les vapeurs s'échappent en dessous de la hotte. Cela a notamment l'inconvénient de nécessiter un grand débit d'aspiration pour mettre en dépression toute la zone extérieure autour de la cuve.

Le modèle d'utilité chinois 208 957 625 n'a pas de capot. EP 1 201 166 A1 ne prévoit pas de capot et l'évacuation a lieu par une soupape d'échappement.

L'invention vise une cuve qui pallie l'inconvénient mentionné ci-dessus.

L'invention a pour objet une cuve suivant la revendication 1.

Cette cuve permet de capter les vapeurs au plus près de la cuve, même dans le cas d'une cuve basculante. Le capot pivotant sert de hotte, qui peut s'escamoter en fonctionnement autre que le refroidissement par du gaz liquide. L'espace défini à l'intérieur du capot permet de faire en sorte que les vapeurs ne se dégagent pas dans l'atmosphère ambiante.

Suivant un mode de réalisation particulièrement préféré, le capot est monté pivotant sur un axe tubulaire mettant l'espace intérieur du capot en communication avec la gaine d'aspiration. L'axe est, de préférence, à un niveau supérieur à celui de l'ouverture de la cuve et peut avoir un trou de poing de visite permettant de nettoyer et de laver l'intérieur de l'axe, le trou de poing de visite étant prévu, de préférence, à une extrémité de l'axe, tandis qu'à l'autre extrémité l'axe communique avec la gaine d'aspiration. L'espace intérieur du capot débouche notamment dans la surface latérale de l'axe, de préférence sensiblement sur toute la longueur de l'axe entre ses paliers. La position fixe dans l'espace de l'axe tubulaire, que le capot soit en la troisième position ou en la quatrième position, facilite le raccordement de l'axe à la gaine.

Le capot peut comporter une plaque, dont le bord s'applique avec étanchéité au bord de l'ouverture et qui a un passage mettant l'intérieur de la cuve en communication avec l'intérieur du capot et une boîte s'élevant de la plaque et délimitant l'intérieur du capot. Le capot peut être appliqué à l'ouverture de la cuve par l'intermédiaire d'un joint d'étanchéité.

De préférence, une buse d'injection débouche au fond de la cuve et communique avec une bouteille d'azote liquide.

Pour empêcher une congélation, il vaut mieux prévoir un agitateur à une distance de 2 à 20 cm, de préférence de 2 à 10 cm, du fond de la cuve.

Aux dessins annexés donnés uniquement à titre d'exemple :

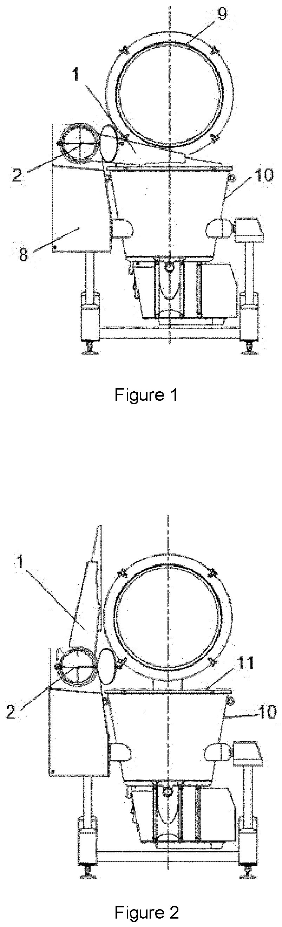

- la figure 1: est une vue en élévation d'une cuve suivant l'invention, alors que le capot est appliqué à la cuve ; tandis qu'à
- la figure 2: le capot n'est pas appliqué à la cuve ;

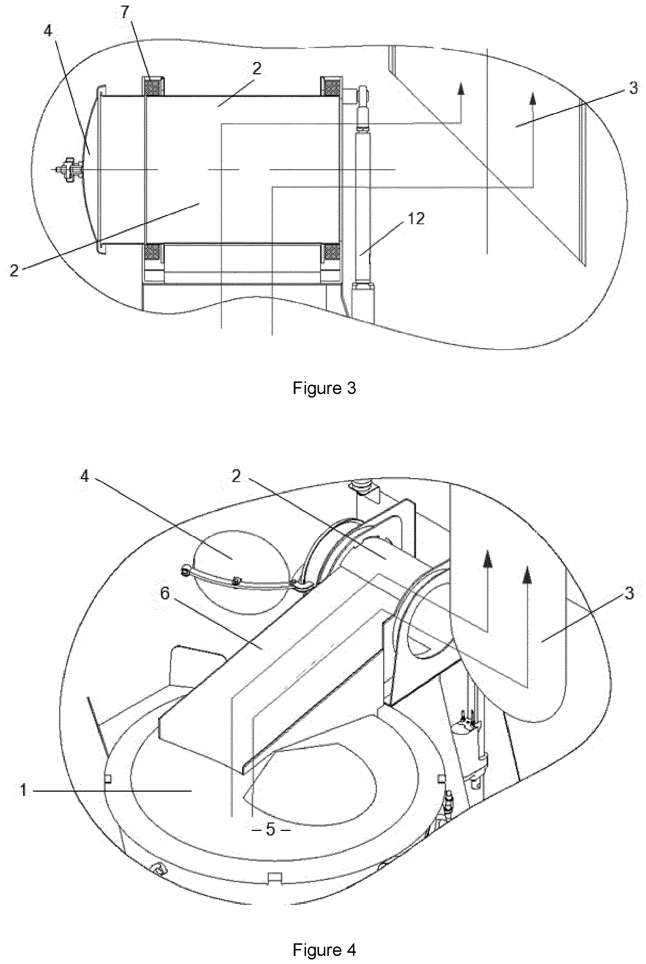

- la figure 3: est une vue partielle en coupe de l'axe de pivotement du capot ;
- la figure 4: est une vue partielle en perspective du capot ; et
- la figure 5: est une vue en coupe du fond d'un mode de réalisation d'une cuve suivant l'invention.

La cuve suivant l'invention comprend un corps 10 définissant l'intérieur de la cuve ayant une ouverture 11 en haut et un capot 1 de captage des vapeurs et des gaz. Le capot 1 est monté pivotant sur un axe 2 tubulaire de communication permettant de canaliser les vapeurs vers une gaine 3 d'aspiration. Cet axe 2 est équipé d'une trappe 4 de visite ou trou de poing de visite monté pivotant à l'extrémité opposée à celle avec laquelle il communique avec la gaine 3 d'aspiration.

Le capot 1 se compose d'une plaque 5, dont le bord s'applique avec interposition d'une garniture d'étanchéité au bord de l'ouverture (11) de la cuve et qui a un passage mettant l'intérieur de la cuve en communication avec l'intérieur d'une boîte 6, qui compose également le capot 1. La boîte 6 s'élève de la plaque 5 et délimite un espace confiné à l'intérieur du capot 1. La boîte 6 a des parois latérales et une paroi supérieure, qui s'élève vers l'axe 2. Les parois sont soudées à la plaque 5 et à la surface latérale extérieure de l'axe 2 Le capot 1 est appliqué à l'ouverture 11 de la cuve par l'intermédiaire d'un joint d'étanchéité. L'espace intérieur du capot 1 débouche dans la surface latérale de l'axe 2 sur toute la longueur de l'axe 2 entre ses paliers 7 fixés à un bâti 8. L'axe 2 est monté pivotant par un vérin 12 de manœuvre.

La cuve a, en outre, un couvercle 9 habituel pouvant être rabattu en position horizontale sur l'ouverture 11 de la cuve et en être éloigné en position verticale, de manière à permettre au capot 1 d'être, depuis une position verticale, appliqué en position horizontale à l'ouverture 11 de la cuve, lorsque le couvercle 9 en est écarté en position verticale.

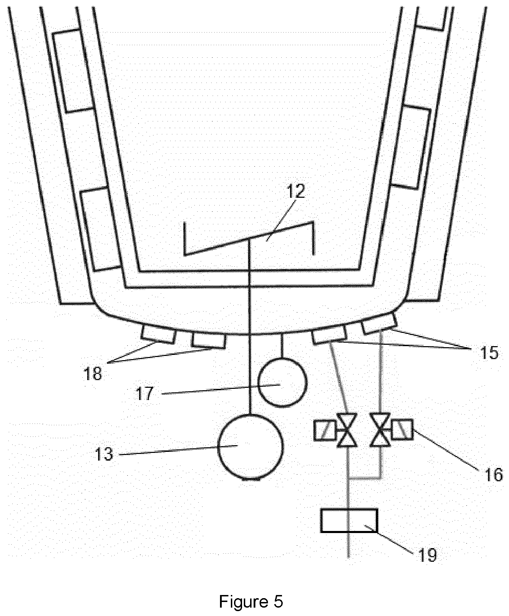

La cuve de la figure 5 a un couteau 13 agitateur au fond de la cuve. Le couteau est entraîné en rotation par un moteur 14. Au fond de la cuve débouchent deux buses 15 d'injection d'azote liquide calibrées par des vannes 16 régulées par une sonde 17 de température. La distance entre le couteau 12 et le fond de la cuve est comprise entre 2 et 20 cm, de préférence entre 2 et 10 cm. Les buses 15 communiquent avec une bouteille 19 d'azote liquide. Deux buses 18 d'injection de vapeur débouchent au fond de la cuve.

## Revendications

1. Cuve pour la cuisson de produits agroalimentaires et le refroidissement rapide au moyen de l'injection dans la cuve d'azote ou de CO₂ liquide à très basse température, ayant un couvercle (9) pouvant, d'une première position ouverte, dans laquelle l'intérieur de la cuve communique avec l'atmosphère ambiante par une ouverture (11), être appliqué à l'ouverture (11) de la cuve dans une deuxième position, dans laquelle l'intérieur de la cuve ne communique pas avec l'atmosphère ambiante par l'ouverture (11), **caractérisée par** un capot (1) qui, d'une troisième position, dans laquelle il ne s'applique pas à l'ouverture (11), est monté de manière à pouvoir, lorsque le couvercle (9) est dans la première position, être appliqué à l'ouverture (11) dans une quatrième position, dans laquelle l'intérieur de la cuve ne communique pas avec l'atmosphère ambiante par l'ouverture (11) et dans laquelle un espace confiné à l'intérieur du capot (1) communique avec l'intérieur de la cuve et avec une gaine (3) d'aspiration.

2. Cuve suivant la revendication 1, **caractérisée en ce que** le capot (1) est monté pivotant sur un axe (2) tubulaire mettant l'espace intérieur du capot (1) en communication avec la gaine (3) d'aspiration.

3. Cuve suivant la revendication 2, **caractérisée en ce que** l'axe (2) a un trou de poing (4) de visite.

4. Cuve suivant la revendication 3, **caractérisée en ce que** le trou de poing (4) de visite est prévu à une extrémité de l'axe (2).

5. Cuve suivant la revendication 3, **caractérisée en ce que** l'axe communique avec la gaine (3) d'aspiration par une extrémité.

6. Cuve suivant la revendication 3, **caractérisée en ce que** l'espace intérieur du capot (1) débouche dans la surface latérale de l'axe (2) sur toute la longueur de l'axe (2) entre ses paliers (7).

7. Cuve suivant l'une des revendications précédentes, **caractérisée en ce que** le capot (1) se compose d'une plaque (5), dont le bord s'applique avec étanchéité au bord de l'ouverture (11) et qui a un passage mettant l'intérieur de la cuve en communication avec l'intérieur du capot (1), et d'une boîte (6) s'élevant de la plaque (5) et délimitant l'intérieur du capot (1).

8. Cuve suivant la revendication 7, **caractérisée en ce que** le capot (1) est appliqué à l'ouverture (11) de la cuve par l'intermédiaire d'un joint d'étanchéité.

9. Cuve suivant l'une des revendications précédentes, **caractérisée par** une buse (15) d'injection débouchant au fond de la cuve et communiquant avec une bouteille (19) d'azote liquide.

10. Cuve suivant l'une des revendications précédentes, **caractérisée par** un agitateur (12) à une distance de 2 à 20 cm, de préférence de 2 à 10 cm, du fond de la cuve.

## Patentansprüche

1. Tank zum Kochen von Lebensmitteln aus landwirtschaftlicher Produktion und zur schnellen Abkühlung mittels Einspritzung von flüssigem Stickstoff oder CO2 mit sehr niedriger Temperatur in den Tank, welcher einen Deckel (9) aufweist, der aus einer geöffneten ersten Position, in der das Innere des Tanks mit der umgebenden Atmosphäre über eine Öffnung (11) in Verbindung steht, an die Öffnung (11) des Tanks in einer zweiten Position angedrückt werden kann, in der das Innere des Tanks nicht mit der umgebenden Atmosphäre über die Öffnung (11) in Verbindung steht, **gekennzeichnet durch** eine Haube (1), die so angebracht ist, dass sie, wenn sich der Deckel (9) in der ersten Position befindet, aus einer dritten Position, in der sie nicht an die Öffnung (11) angedrückt ist, an die Öffnung (11) in einer vierten Position angedrückt werden kann, in der das Innere des Tanks nicht mit der umgebenden Atmosphäre über die Öffnung (11) in Verbindung steht und in der ein geschlossener Raum im Inneren der Haube (1) mit dem Inneren des Tanks und mit einem Absaugkanal (3) in Verbindung steht.

2. Tank nach Anspruch 1, **dadurch gekennzeichnet, dass** die Haube (1) schwenkbar auf einer rohrförmigen Achse (2) gelagert ist, die den Innenraum der Haube (1) mit dem Absaugkanal (3) in Verbindung bringt.

3. Tank nach Anspruch 2, **dadurch gekennzeichnet, dass** die Achse (2) ein Handloch (4) zur Inspektion aufweist.

4. Tank nach Anspruch 3, **dadurch gekennzeichnet, dass** das Handloch (4) zur Inspektion an einem Ende der Achse (2) vorgesehen ist.

5. Tank nach Anspruch 3, **dadurch gekennzeichnet, dass** die Achse mit dem Absaugkanal (3) über ein Ende in Verbindung steht.

6. Tank nach Anspruch 3, **dadurch gekennzeichnet, dass** der Innenraum der Haube (1) auf der gesamten Länge der Achse (2) zwischen ihren Lagern (7) in die Seitenfläche der Achse (2) mündet.

7. Tank nach einem der vorhergehenden Ansprüche, **dadurch gekennzeichnet, dass** die Haube (1) aus einer Platte (5) besteht, deren Rand dichtend an den Rand der Öffnung (11) angedrückt wird und die einen Durchlass aufweist, der das Innere des Tanks mit dem Inneren der Haube (1) in Verbindung bringt, und aus einem Kasten (6), der sich von der Platte (5) aus erhebt und das Innere der Haube (1) begrenzt.

8. Tank nach Anspruch 7, **dadurch gekennzeichnet, dass** die Haube (1) an die Öffnung (11) des Tanks über eine Dichtung angedrückt wird.

9. Tank nach einem der vorhergehenden Ansprüche, **gekennzeichnet durch** eine Einspritzdüse (15), die am Boden des Tanks mündet und mit einer Flasche (19) mit flüssigem Stickstoff in Verbindung steht.

10. Tank nach einem der vorhergehenden Ansprüche, **gekennzeichnet durch** einen Rührer (12) in einem Abstand von 2 bis 20 cm, vorzugsweise von 2 bis 10 cm, vom Boden des Tanks.

## Claims

1. Tank for cooking agri-food products and rapid cooling by injecting liquid nitrogen or CO₂ at a very low temperature into the tank, having a lid (9) that can be applied, from a first open position, in which the inside of the tank is in contact with the ambient atmosphere via an opening (11), to the opening (11) of the tank in a second position, in which the inside of the tank is not in contact with the ambient atmosphere via the opening (11), **characterised by** a cover (1), which, from a third position, in which it is not applied to the opening (11), is fitted such that it is able, when the lid (9) is in the first position, to be applied to the opening (11) in a fourth position, in which the inside of the tank is not in contact with the ambient atmosphere via the opening (11) and in which a confined space inside the cover (1) is in contact with the inside of the tank and with a suction duct (3).

2. Tank according to claim 1, **characterised in that** the cover (1) is installed such that it pivots on a tubular shaft (2), putting the interior space of the cover (1) in contact with the suction duct (3).

3. Tank according to claim 2, **characterised in that** the shaft (2) has an inspection handhole (4).

4. Tank according to claim 3, **characterised in that** the inspection handhole (4) is provided at one end of the shaft (2).

5. Tank according to claim 3, **characterised in that** the shaft is in contact with the suction duct (3) via one end.

6. Tank according to claim 3, **characterised in that** the interior space of the cover (1) emerges in the side surface of the shaft (2) over the entire length of the shaft (2) between its bearings (7).

7. Tank according to any of the preceding claims, **characterised in that** the cover (1) comprises a plate (5), the edge of which is applied in a leaktight manner to the edge of the opening (11) and which has a passage that connects the inside of the tank with the inside of the cover (1) and a casing (6) rising up from the plate (5) and delimiting the inside of the cover (1).

8. Tank according to claim 7, **characterised in that** the cover (1) is applied to the opening (11) of the tank by means of a seal.

9. Tank according to any of the preceding claims, **characterised by** an injection nozzle (15) emerging at the bottom of the tank and being in contact with a liquid nitrogen cylinder (19).

10. Tank according to any of the preceding claims, **characterised by** an agitator (12) 2 to 20 cm away, preferably 2 to 10 cm away, from the bottom of the tank.
